# FASCICULE DE BREVET EUROPEEN

(11) **EP 2 946 136 B1**
(45) Date de publication et mention de la délivrance du brevet: **14.06.2017**
(21) Numéro de dépôt: 13814074.4
(22) Date de dépôt: 16.12.2013
(51) Int. Cl.: F16L 37/088, F16L 37/14

(54) **DISPOSITIF DE CONNEXION RAPIDE**
SCHNELLLVERBINDERVORRICHTUNG
QUICK CONNECTOR DEVICE

(30) Priorité: 17.01.2013 FR 1350395
(43) Date de publication de la demande: 25.11.2015
(73) Titulaire: MAHLE International GmbH, 70376 Stuttgart (DE)
(72) Inventeur: KRUPA, Andrzej, 63-400 Ostow WLKP (PL); KLEMT, Krystian, 63-400 Ostrow WLKP (PL)
(74) Mandataire: BRP Renaud & Partner mbB Rechtsanwälte Patentanwälte Steuerberater
(86) Numéro de dépôt international: PCT/EP2013/076729
(87) Numéro de publication internationale: WO 2014/111214

(56) Documents cités:
- EP-A2- 0 959 291
- DE-A1- 1 929 147
- JP-A- H0 650 483
- US-A- 5 113 571

## Description

### DOMAINE TECHNIQUE

L'invention est relative à un processus pour la fabrication d'une connexion rapide entre deux pièces tubulaires.

### ARRIERE-PLAN TECHNOLOGIQUE DE L'INVENTION

Il existe des dispositifs de connexion rapide de deux pièces tubulaires comprenant un embout mâle, ou tourillon, fixé à l'une des pièces, et un embout femelle, ou connecteur, fixé à l'autre pièce. L'assemblage complémentaire du tourillon dans le connecteur assure l'étanchéité de la connexion. L'assemblage est retenu par une agrafe élastique solidaire du connecteur qui, lors de l'assemblage s'écarte pour laisser s'engager le tourillon puis se loge dans une rainure transversale pourvue dans le tourillon. De plus, le tourillon est pourvu de deux languettes et le connecteur de deux rainures complémentaires formant un moyen de prévention de la rotation des pièces. Le connecteur et le tourillon sont réalisés en plastique moulé et un moule complexe est nécessaire. Il est notamment pourvu d'inserts pour ménager les rainures de positionnement de l'agrafe. De plus, la forme imposée ne permet pas la fabrication facile de tourillons métalliques. On peut se reporter à EP 0 959 291, DE 19 29 147, US 5 113 571 et JP H 06 50483 sur lequel le préambule de la revendication 1 est basé.

### RESUME DE L'INVENTION

La présente invention résout ces problèmes en proposant un procédé simple permettant la réalisation d'un dispositif de connexion rapide comprenant un tourillon métallique, par exemple réalisé en alliage d'aluminium, en cuivre, en laiton voire en acier, s'emboitant de manière complémentaire dans un connecteur. Le processus comprend l'étape de former par extrusion d'un tube métallique, alliage d'aluminium ou autre, une ébauche du tourillon s'étendant longitudinalement depuis une grande extrémité jusqu'à une petite extrémité selon un premier tronçon cylindrique, puis en se rétrécissant selon un tronçon conique puis selon un second tronçon cylindrique, la paroi de l'ébauche tubulaire étant
d'une épaisseur sensiblement constante selon les trois tronçons. L'étape d'extrusion comprend en outre la formation de deux languettes longitudinales réalisés sur la surface extérieure du premier tronçon, les languettes étant diamétralement opposées et étant parties à un dispositif anti-rotation du dispositif.

Le processus comprend de plus l'étape de réaliser dans le premier tronçon deux saignées transversales traversant la paroi du premier tronçon, les saignées formant des fenêtres ouvertes séparées par les deux languettes. Ces saignées peuvent être réalisées selon plusieurs procédés notamment par sciage transversal. Au moyen de scies droites ou circulaires, les fenêtres peuvent être réalisées l'une après l'autre ou bien simultanément. Les fenêtres peuvent également être réalisées par estampage radial après avoir inséré à l'intérieur du tourillon un mandrin prévenant les déformations.

L'invention est également relative à un processus de réalisation d'une connexion rapide par emboitement complémentaire d'un tourillon, solidaire d'une première pièce tubulaire, dans un connecteur solidaire d'une seconde pièce tubulaire, le processus de réalisation de la connexion comprenant l'étape de pourvoir un tourillon réalisé selon le paragraphe précédent, le premier tronçon du tourillon ayant un diamètre intérieur ajusté au diamètre extérieur de la première pièce et un diamètre extérieur ajusté au diamètre intérieur du connecteur. Le processus comprend également l'étape d'insérer la première pièce dans le premier tronçon de sorte que le tourillon soit en butée en bout de la première pièce tubulaire. Les fenêtres sont alors obturées par la première pièce. Le processus comprend également l'étape de fixer le tourillon en bout de la première pièce.

La fixation peut comprendre une étape de fixation temporaire qui se fait par déformation locale de la première pièce en réalisant des protubérances radiales s'insérant dans les fenêtres. La fixation temporaire est préalable à une étape de fixation définitive pouvant être réalisée par brasage. Il est alors avantageux de pourvoir une rondelle de brasage dont les diamètres extérieur et intérieur sont sensiblement ceux de la première pièce (2) tubulaire puis d'agencer la rondelle de brasage dans le tourillon avant l'insertion de la première pièce dans le premier tronçon du tourillon, de sorte qu'une fois la première pièce insérée, la rondelle de brasage soit coincée entre le tourillon et la première pièce.

L'invention est encore relative à un dispositif de connexion rapide comprenant un tourillon s'emboitant de manière complémentaire dans un connecteur, le dispositif étant réalisé les paragraphes précédents.

L'invention concerne également un circuit de refroidissement pour véhicule, le circuit comprenant un échangeur thermique connecté à des tuyaux de circulation d'un fluide, une des connexions étant réalisée selon les paragraphes précédents.

### DESCRIPTION DES FIGURES

Un mode de réalisation de l'invention est maintenant décrit par l'intermédiaire des figures suivantes.
La Figure 1 est une vue isométrique d'un dispositif de connexion rapide comprenant un tourillon et un connecteur, le dispositif n'étant pas assemblé.
La Figure 2 représente le dispositif de la Figure 1 assemblé.
La Figure 3 est une ébauche du tourillon de la Figure 1.
La Figure 4 est une vue du tourillon terminé.
La Figure 5 est une coupe de l'assemblage du tourillon de la Figure 4 en bout d'une pièce tubulaire.
La Figure 6 est une vue isométrique du montage final.

### DESCRIPTION DES MODES DE REALISATION PRÉFÉRÉS

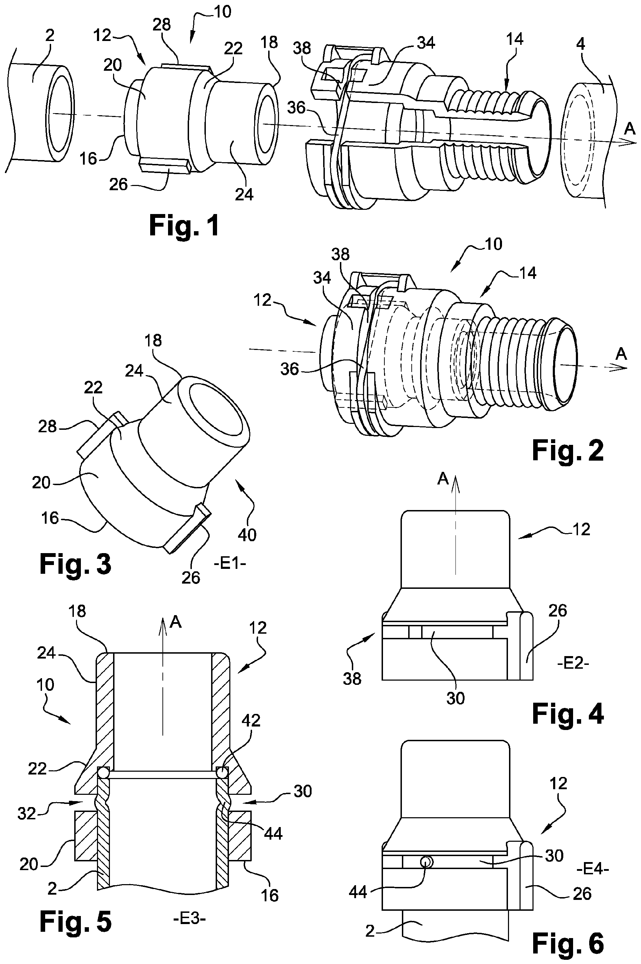

Selon les Figures 1 et 2, une première et une seconde pièces tubulaires, 2, 4, sont connectées grâce à un dispositif 10 d'assemblage rapide. Le dispositif 10 comprend un tourillon 12 métallique, par exemple en aluminium en cuivre, en laiton ou encore en acier, solidaire de l'embout de la première pièce 2 et un connecteur 14 femelle solidaire de l'embout de la seconde pièce tubulaire 4. Le tourillon 12 est tubulaire et s'étend selon un axe longitudinal A d'une grande extrémité 16 engagée sur la première pièce tubulaire 2 jusqu'à une petite extrémité 18 libre. Entre ses deux extrémités 16, 18, le tourillon 12 comprend un premier tronçon 20 cylindrique, puis un tronçon conique 22 puis un second tronçon cylindrique 24, d'un diamètre inférieur à celui du premier tronçon 20. Le premier tronçon 20 est pourvu de deux languettes longitudinales 26, 28, diamétralement opposées et prévues pour s'engager dans des rainures complémentaires du connecteur 14 et ainsi empêcher la rotation du tourillon 12 relativement au connecteur 14. Le premier tronçon 20 est de plus pourvu de deux ouvertures transversales 30, 32, formant deux fenêtres en regard l'une de l'autre, chacune s'étendant entre les languettes 26, 28.

Le connecteur 14 comprend un tronçon cylindrique tubulaire 34 dont le diamètre intérieur permet l'engagement juste glissant du premier tronçon 20 du tourillon 12. Ce tronçon 34 est pourvu d'une agrafe élastique 36 en forme de U dont les branches passent par des ouvertures transversales 38, 40, du connecteur 14. La forme en U de l'agrafe n'est qu'un exemple illustratif et de nombreuses alternatives peuvent exister.

Lors de l'engagement du tourillon 12 dans le connecteur 14, la petite extrémité 18 libre et le second tronçon cylindrique 24 du tourillon passent entre les branches du U. Ensuite, le tronçon conique 22 écarte élastiquement les branches du U jusqu'à permettre le passage du premier tronçon cylindrique 20. Lorsque le tourillon 12 est entièrement engagé dans le connecteur 14, les fenêtres transversales 30, 32, du tourillon 12 se placent en regard des ouvertures transversales 38, 40, du connecteur 14 et, l'agrafe 36 reprend sa forme d'origine en U, les branches de l'agrafe 36 s'engageant dans les fenêtres 30, 32, du tourillon 12. Le dispositif 10 est ainsi axialement maintenu en place et ne peut être déconnecté qu'en écartant les branches de l'agrafe 36 puis en tirant sur la première pièce 2 pour dégager le tourillon 12.

Selon la Figure 3, au cours d'une première étape E1 de fabrication, une ébauche 40 du tourillon 12 est réalisée par extrusion d'un tube métallique, aluminium ou autre. Au terme de cette première étape E1, l'ébauche 40 comprend le premier tronçon cylindrique 20, le tronçon conique 22 et le second tronçon cylindrique 24 ainsi que les languettes longitudinales 26, 28. Le processus d'extrusion est suffisamment précis pour que les dimensions obtenues n'aient pas besoin d'être reprises ultérieurement par d'autres procédés.

Selon la Figure 4, au cours d'une deuxième étape E2 de fabrication, les fenêtres 30, 32, sont réalisées par découpe transversale ou bien par estampage après avoir inséré un mandrin dans le l'ébauche 40. D'autres alternatives existent dont le choix dépend notamment de la quantité de pièce à réaliser.

Au terme de la deuxième étape E2 le tourbillon 12 en métallique est terminé.

Selon la Figure 5, au cours d'une troisième étape E3, le tourillon 12 terminé est monté en bout de la première pièce 2 tubulaire en engageant ladite première pièce 2 dans le premier tronçon cylindrique 20 jusqu'à dépasser les fenêtres transversales 30, 32, et venir en butée dans le tronçon conique 22. Entre l'extrémité de la première pièce tubulaire 2 et le tourillon 12 a été intercalée une rondelle de brasage 42 destinée à fondre lors d'une opération ultérieure de brasage et a ainsi joindre de manière permanente le tourillon 12 et la première pièce 2. La composition de la rondelle de brasage est fonction du métal choisi pour réaliser le tourillon 12. Par exemple, dans le cas d'un tourillon 12 en alliage d'aluminium, la rondelle de brasage 42 est réalisée en un alliage d'aluminium et silicium dont le point de fusion est inférieur à celui de l'aluminium. Comme cela est visible sur la coupe de la Figure 5 et sur la Figure 6, la première pièce tubulaire 2 étant engagée au-delà des fenêtres transversales 30, 32, cette première pièce 2 obture lesdites fenêtres 30, 32. De manière alternative le tourillon peut être recouvert de flux de brasage cequi permet de ne pas mettre de rondelle de brasage.

Au terme de la troisième étape E3, le tourillon 12 est en place en bout de la première pièce tubulaire 2.

Selon la Figure 6, au cours d'une quatrième étape E4, le tourillon 12 est fixé de manière temporaire à la première pièce 2 en déformant radialement la première pièce 2 de sorte à réaliser des protubérances 44 qui s'engagent dans les fenêtres 30, 32, transversales. Pour réaliser ces déformations un outil, non représenté, est inséré dans le tourillon 12 en le faisant passer par la petite extrémité 18 jusqu'à se placer au droit des fenêtres 30, 32. L'outil est ensuite écarté de sorte à déformer la matière de la première pièce 2 et à réaliser les protubérances 44.

Une cinquième opération E5, non représentée, consiste à braser l'ensemble en vue d'un assemblage définitif du tourillon 12 en bout de la première pièce 2. Au cours du brasage la rondelle 42 fond joignant le tourillon 12 et la première pièce tubulaire 2.

Des dispositifs 10 de connexion de différentes tailles peuvent ainsi être réalisés pour s'adapter aux pièces à connecter. Des connexions de ce type peuvent par exemple être utilisées au sein d'un circuit d'échange thermique d'un véhicule, notamment le circuit de refroidissement moteur, pour connecter un radiateur avec les canalisations dans lesquelles circule le fluide de refroidissement.

## Revendications

1. Processus de réalisation d'un dispositif (10) de connexion rapide comprenant un tourillon (12) métallique s'emboitant de manière complémentaire dans un connecteur (14), le processus étant caractérisant en ce qu'il comprend l'étape de:
- former par extrusion (E1) d'un tube métallique une ébauche (40) du tourillon (12) s'étendant longitudinalement (A) depuis une grande extrémité (16) jusqu'à une petite extrémité (18) selon un premier tronçon cylindrique (20), puis en se rétrécissant selon un tronçon conique (22) puis selon un second tronçon cylindrique (24), la paroi de l'ébauche (40) tubulaire étant d'une épaisseur sensiblement constante selon les trois tronçons (20, 22,24),
et dans lequel l'étape d'extrusion (E1) comprend en outre la formation de deux languettes longitudinales (26, 28) réalisées sur la surface extérieure du premier tronçon (20), les languettes (26, 28) étant diamétralement opposées et étant parties à un dispositif anti-rotation du dispositif (10),
et comprenant de plus l'étape de réaliser (E2) dans le premier tronçon (20) deux saignées transversales traversant la paroi du premier tronçon (20), les saignées formant des fenêtres (30, 32) ouvertes séparées par les deux languettes (26, 28).

2. Processus de réalisation d'une connexion rapide par emboitement complémentaire d'un tourillon (12), solidaire d'une première pièce tubulaire (2), dans un connecteur (14) solidaire d'une seconde pièce (4) tubulaire, le processus de réalisation de la connexion comprenant les étapes de :
- pourvoir un tourillon (12) réalisé selon la revendication 1, le premier tronçon (20) du tourillon (12) ayant un diamètre intérieur ajusté au diamètre extérieur de la première pièce (2) et un diamètre extérieur ajusté au diamètre intérieur du connecteur (14) ;
- insérer (E3) la première pièce (2) dans le premier tronçon (20) de sorte que le tourillon (12) soit en butée en bout de la première pièce (2) tubulaire, les fenêtres (30, 32) étant obturées par la première pièce (2) ;
- fixer le tourillon (12) en bout de la première pièce (2).

3. Processus de réalisation d'une connexion rapide selon la revendication 2 dans lequel l'étape de fixer le tourillon (12) en bout de la première pièce (2) comprend une étape de fixation temporaire (E4) qui se fait par déformation locale de la première pièce (2) en réalisant des protubérances (44) radiales s'insérant dans les fenêtres (30, 32).

4. Processus de réalisation d'une connexion rapide selon l'une quelconque des revendications 2 ou 3 dans lequel l'étape de fixer l'assemblage comprend une étape de fixation définitive.

5. Processus de réalisation d'une connexion rapide selon la revendication 4 dans lequel la fixation définitive est réalisée par brasage.

6. Processus de réalisation d'une connexion rapide selon la revendication 5 prise en combinaison avec l'une quelconque des revendications 2 ou 3 comprenant de plus les étapes de :
- pourvoir une rondelle de brasage (42) dont les diamètres extérieur et intérieur sont sensiblement ceux de la première pièce (2) tubulaire ;
- agencer la rondelle de brasage (42) dans le tourillon (12) avant l'insertion (E3) de la première pièce (2) dans le premier tronçon (20) du tourillon (12), de sorte qu'une fois la première pièce (2) insérée, la rondelle de brasage (42) soit coincée entre le tourillon (12) et la première pièce (2).

7. Dispositif (10) de connexion rapide comprenant un tourillon (12) s'emboitant de manière complémentaire dans un connecteur (14), le dispositif (10) étant réalisé selon la revendication 1.

8. Circuit de refroidissement pour véhicule, le circuit comprenant un échangeur thermique connecté à des tuyaux de circulation d'un fluide, une des connexions étant réalisée selon l'une quelconque des revendications 2 à 6.

## Patentansprüche

1. Verfahren zur Herstellung einer Vorrichtung (10) zur Schnellverbindung, die einen metallischen Lagerzapfen (12) umfasst, der in komplementärer Weise in einen Konnektor (14) einrastet, wobei das Verfahren **dadurch gekennzeichnet ist, dass** es die Schritte umfasst:
- durch Extrusion (E1) von einem metallischen Rohr Formen eines Rohlings (40) des Lagerzapfens (12), der sich longitudinal (A) von einem großen Ende (16) bis zu einem kleinem Ende (18) entlang eines ersten zylindrischen Abschnitts (20), dann, wobei er sich verengt, entlang eines konischen Abschnitts (22), dann entlang eines zweiten zylindrischen Abschnitts (24) erstreckt, wobei die Wand des rohrförmigen Rohlings (40) eine im Wesentlichen konstante Dicke entlang der drei Abschnitte (20, 22, 24) hat,
und wobei der Schritt zur Extrusion (E1) ferner die Bildung von zwei longitudinalen Laschen (26, 28) umfasst, die auf der Außenfläche des ersten Abschnitts (20) hergestellt sind, wobei die Laschen (26, 28) diametral gegenüber liegen und Teile einer Antirotationsvorrichtung der Vorrichtung (10) sind,
und das ferner den Schritt der Herstellung (E2) in dem ersten Abschnitt (20) von zwei quer verlaufenden Schlitzungen umfasst, die durch die Wand des ersten Abschnitts (20) verlaufen, wobei die Schlitzungen offene Fenster (30, 32) bilden, die durch die zwei Laschen (26, 28) getrennt sind.

2. Verfahren zur Herstellung einer Schnellverbindung durch komplementäres Einrasten eines Lagerzapfens (12), der an einem ersten rohrförmigen Teil (2) befestigt ist, in einem Konnektor (14), der an einem zweiten rohrförmigen Teil (4) befestigt ist, wobei das Verfahren zur Herstellung der Verbindung die Schritte umfasst:
- Vorsehen eines Lagerzapfens (12), der nach Anspruch 1 hergestellt ist, wobei der erste Abschnitt (20) des Lagerzapfens (12) einen Innendurchmesser, der an den Außendurchmesser des ersten Teils (2) angepasst ist, und einen Außendurchmesser hat, der an den Innendurchmesser des Konnektors (14) angepasst ist;
- Einsetzen (E3) des ersten Teils (2) in den ersten Abschnitt (20), so dass der Lagerzapfen (12) an dem Ende des ersten rohrförmigen Teils (2) anliegt, wobei die Fenster (30, 32) durch das erste Teil (2) verschlossen sind;
- Befestigen des Lagerzapfens (12) an dem Ende des ersten Teils (2).

3. Verfahren zur Herstellung einer Schnellverbindung nach Anspruch 2, wobei der Schritt des Befestigens des Lagerzapfens (12) am Ende des ersten Teils (2) einen Schritt der temporären Befestigung (E4) umfasst, der durch eine lokale Verformung des ersten Teils (2) durchgeführt wird, indem radiale Ausstülpungen (44) hergestellt werden, die in die Fenster (30, 32) eingesetzt sind.

4. Verfahren zur Herstellung einer Schnellverbindung gemäß einem der Ansprüche 2 oder 3, wobei der Schritt zum Befestigen der Baugruppe einen Schritt der endgültigen Befestigung umfasst.

5. Verfahren zur Herstellung einer Schnellverbindung nach Anspruch 4, wobei die endgültige Befestigung durch Verlöten (E5) hergestellt wird.

6. Verfahren zur Herstellung einer Schnellverbindung nach Anspruch 5 in Kombination mit einem der Ansprüche 2 oder 3, das ferner die Schritte umfasst:
- Vorsehen einer Lötscheibe (42), deren äußerer und innerer Durchmesser im Wesentlichen denjenigen des ersten röhrenförmigen Teils (2) gleich sind;
- Anordnen der Lötscheibe (42) in dem Lagerzapfen (12) vor dem Einsetzen (E3) des ersten Teils (2) in den ersten Abschnitt (20) des Lagerzapfens (12), so dass, sobald das erste Teil (2) eingesetzt ist, die Lötscheibe (42) zwischen dem Lagerzapfen (12) und dem ersten Teil (2) eingeklemmt ist.

7. Vorrichtung (10) zur Schnellverbindung, die einen Lagerzapfen (12) umfasst, der auf komplementäre Weite in einen Konnektor (14) einrastet, wobei die Vorrichtung (10) nach Anspruch 1 hergestellt ist.

8. Anlage zum Kühlen für ein Fahrzeug, wobei die Anlage einen Wärmetauscher umfasst, der mit Rohren zur Zirkulation eines Fluids verbunden ist, wobei eine der Verbindungen nach einem der Ansprüche 2 bis 6 hergestellt ist.

## Claims

1. Method for producing a quick connection device (10) having a metal journal (12) that fits in a complementary manner into a connector (14), the method being **characterized in that** it comprises the step of:
- extruding (E1) a metal tube to form a blank (40) of the journal (12) extending longitudinally (A) from a large end (16) to a small end (18) along a first cylindrical portion (20), then narrowing along a conical portion (22) and then along a second cylindrical portion (24), the tubular blank (40) having a wall with a thickness that is substantially constant along the three portions (20, 22, 24),
and wherein the extrusion step (E1) also includes the forming of two longitudinal lugs (26, 28) produced on an exterior surface of the first portion (20), the lugs (26, 28) being diametrically opposite one another and being part of an anti-rotation device of the device (10),
and also comprising the step of producing (E2) in the first portion (20) two transverse slits through the wall of the first portion (20), the slits forming open apertures (30, 32) separated by the two lugs (26, 28).

2. Method for producing a quick connection by the complementary fitting of a journal (12), secure with a first tubular component (2), into a connector (14) secure with a second tubular component (4), the method of producing the connection comprising the steps of:
- providing a journal (12) produced according to claim 1, the first portion (20) of the journal (12) having an interior diameter adjusted to the exterior diameter of the first component (2) and an exterior diameter adjusted to the interior diameter of the connector (14);
- inserting (E3) the first component (2) into the first portion (20) so that the journal (12) abuts an end of the first tubular component (2), the apertures (30, 32) being closed by the first component (2);
- fixing the journal (12) at the end of the first component (2).

3. Method for producing a quick connection according to claim 2 wherein the step of fixing the journal (12) at the end of the first component (2)comprises the step of temporary fixing (E4) which is performed by the local deformation of the first component (2) by making radial protrusions (44) lodged in the apertures (30, 32).

4. Method for producing a quick connection according to any one of the claims 2 or 3 wherein the step of fixing the assembly comprises a step of permanent fixing.

5. Method for producing a quick connection according to claim 4 wherein the permanent fixing is performed by brazing.

6. Method for producing a quick connection according to claim 5 taken together with any one of claims 2 or 3 additionally comprising the steps of:
- providing a brazing washer (42) whose exterior and interior diameters are substantially those of the first tubular component (2);
- arranging the brazing washer (42) in the journal (12) before the insertion (E3) of the first component (2) into the first portion (20) of the journal (12), so that once the first component (2) is inserted, the brazing washer (42) is trapped between the journal (12) and the first component (2).

7. Quick connection device (10) comprising a journal (12) that fits in a complementary manner into a connector (14), the device (10) being produced according to claim 1.

8. Cooling circuit for a vehicle, the circuit comprising a heat exchanger connected to fluid circulation piping, one of the connections being performed according to any one of claims 2 to 6.
